Europäisches Patentamt

European Patent Office

Office européen des brevets

(11) Publication number: **0 316 549**
**A2**

# EUROPEAN PATENT APPLICATION

(21) Application number: 88116086.5

(51) Int. Cl.⁴ **G06F 9/24** , **G06F 15/06**

(22) Date of filing: 29.09.88

(30) Priority: 03.11.87 US 116607

(43) Date of publication of application:
24.05.89 Bulletin 89/21

(84) Designated Contracting States:
DE FR GB IT

(71) Applicant: **MOTOROLA, INC.**
**1303 East Algonquin Road**
**Schaumburg Illinois 60196(US)**

(72) Inventor: **Myers, Jeffrey Van**
**134 Elderhill Road**
**Driftwood Texas 78619(US)**

(74) Representative: **Ibbotson, Harold et al**
**MOTOROLA European Intellectual Property**
**Operations Jays Close Viables Ind. Estate**
**Basingstoke Hants RG22 4PD(GB)**

(54) A single-chip microprocessor having secure on-chip PROM.

(57) A single chip microprocessor (10) having an on-chip Programmable Read-Only Memory (PROM) (14) which can be prepared for programming with address and data information provided by the on-chip processor (12) but programmed only in response to a signal received from a source external to the microprocessor.

*FIG. 1*

# A SINGLE-CHIP MICROPROCESSOR HAVING SECURE ON-CHIP PROM

Field of the Invention

The subject invention relates generally to a microprocessor having a Programmable Read-Only Memory (PROM) on the same semiconductor chip, and, more particularly, to a microprocessor having a secure PROM.

Background Art

In 1976. Intel Corporation introduced the first microprocessor having a Programmable Read-Only Memory (PROM) on the same semiconductor chip. In this initial product. the 8748, the PROM was of the Eraseable Programmable Read-Only (EPROM) form, and an external PROM Programmer of conventional form was required to program the EPROM completely independently of the on-chip processor. This processor is shown and described in US Patent Number 4.153,933, issued to Blume. In the 25 November 1976 issue of Electronics, in an article entitled "Single-chip 8-bit microcomputer fills gap between calculator types and powerful multichip processors." the 8748 is further described as having a 2708-type of EPROM "that can be changed by clearing with ultraviolet light and reprogrammed electrically in the usual way." (Page 100. first sentence of the paragraph beginning at the bottom of the left column).

In 1979, Motorola, Inc., introduced the first microprocessor having an EPROM which could be programmed completely under the control of the on-chip processor. This microprocessor, the MC68701. is shown and described in US Patent Application Serial Number 047.674, now abandoned but continued as US Patent Application Serial Number 912,183.

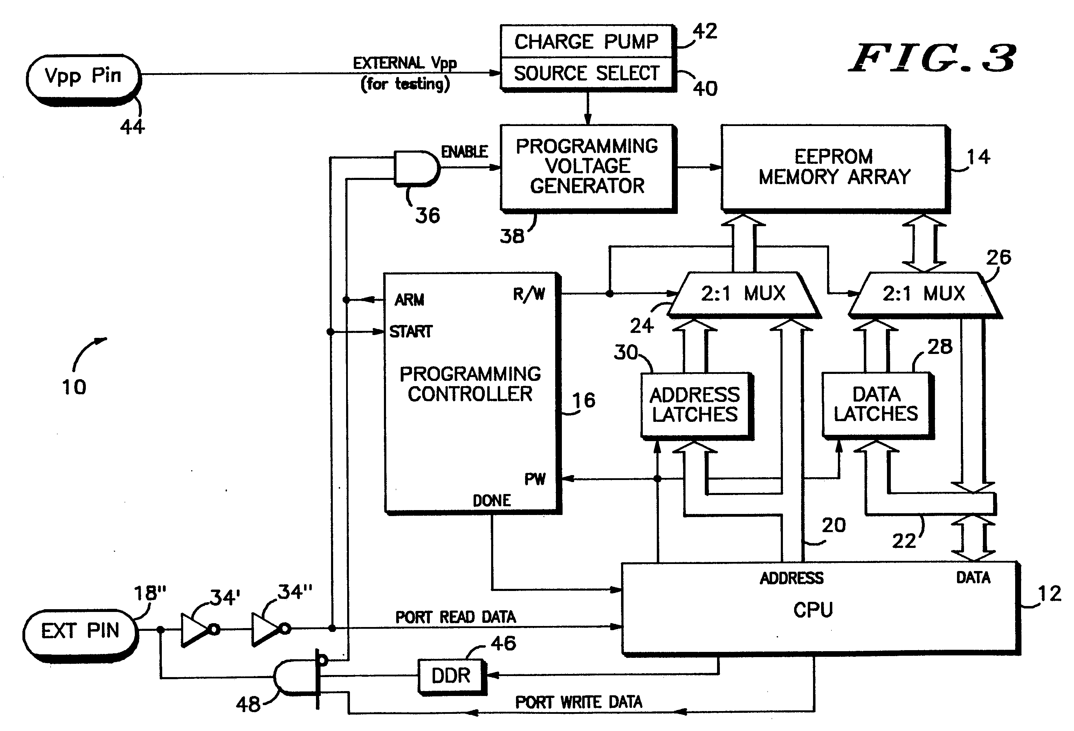

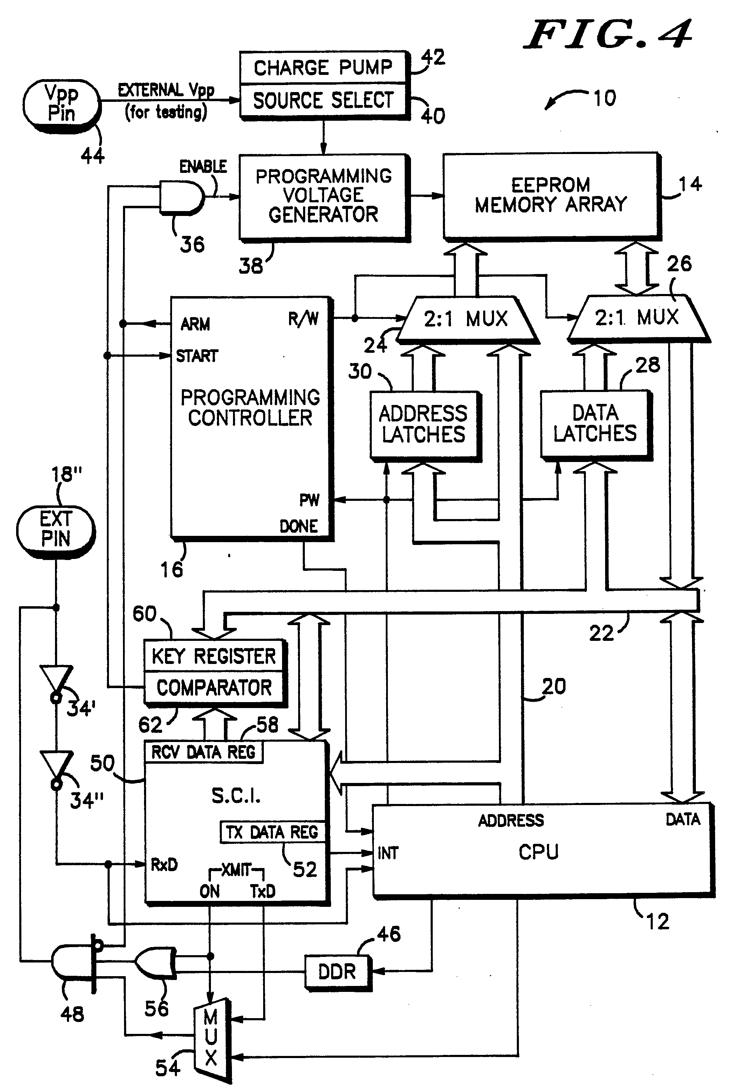

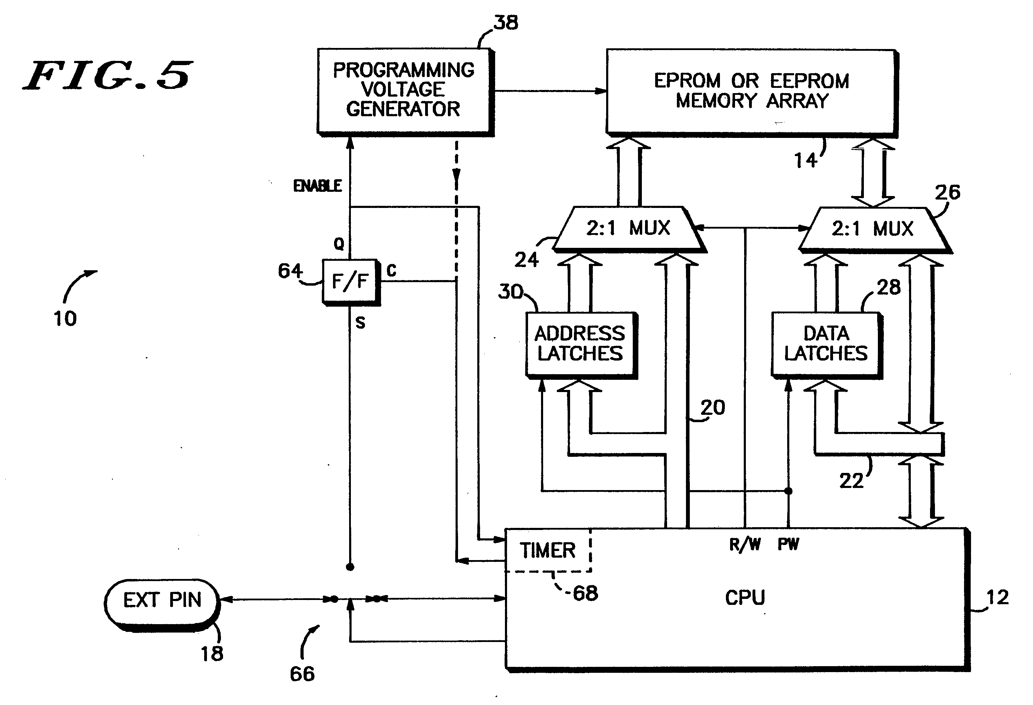

In US4,382,279, issued to Ugon, a single-chip microprocessor with on-chip modifiable memory is disclosed. In Ugon, unlike Blume, the EPROM is writable under the control of the on-chip processor. To allow simultaneous access to both the control memory and the memory to be modified, dual address and data latches are provided. Under control of the program executing out of the control memory. the data to be written into a particular address in the portion of memory to be modified are "moved" into these latches. (See, Figure 5 and lines 16-34 of column 7). A special I/O instruction is then executed to set a "programming" latch P (113 in Figure 3) to output the programming signal PG to the programming circuitry. (See, the "OUTLP.A" microinstruction in column 7 about line 49). After executing a wait loop for a suitable programming interval, e.g. 50 milliseconds (see, Figures 4 and 5 and the "DJNZRx,Compt" microinstructions in column 7 about lines 50-51), another special I/O instruction is executed to reset the P latch. (See, the "OUTPA" microinstruction in column 7 about line 52).

Although many other microprocessors of this "self- programming" type have been introduced in recent years, all utilize either the external programming mechanism or the internal programming mechanism. Both mechanisms, however, have disadvantages in certain applications. For example, in so-called "smart-card" applications, security of the on-chip PROM is of paramount importance. In such applications, the internal programming mode is preferred, so that the programming mechanism will be enabled only if the on-chip processor verifies that all security tests have been met. However, no microprocessor currently available is totally "fail-safe" in operation, and, in general, may "go wild" under certain adverse conditions and execute random code. In such an event, a finite possibility exists that, as a direct result of executing that random code, the processor will inadvertantly enable the on-chip PROM programming circuitry and compromise the security of the critical data in the on-chip PROM. Although various interlock and "dead man" timer mechanisms have been proposed to minimize this possibility, no procedure has been devised to totally eliminate this possibility.

Prior art of general interest is shown and described in the following US Patents:

In US3,978,457, issued to Check, Jr. et al., a microcomputerized electronic postage meter system is disclosed, having a CPU and a non-volatile memory which stores postal accounting information. In Check, the non-volatile memory is disclosed as being in the form of a battery backed up shift register so that the writing thereof is very easy, that is, it does not require any special hardware or write sequence.

In US4,018,565, issued to Fletcher, III et al., an automatic process titration system is disclosed, having a microprocessor and a read-mostly memory which stores operator-entered parameters. In Fletcher, the read- mostly memory is disclosed as being of the electrically alterable type, and the microprocessor is provided with a special read-write subroutine which controls the "complex read-write procedures."

In US4,045,660, issued to Weisgerber et al., a method and apparatus for automatically realigning a machine element to a predetermined position after power interruption is disclosed, having a CPU and a non-volatile memory which stores automatic realignment data.

In US4,053,735, issued to Foudos, an assured-check computer-based bank credit disbursing system is disclosed, having a microprocessor and a non-volatile memory which stores transfer codes and account balance information. In Foudos, the non-volatile memory is disclosed as being in the form of a battery backed up RAM so that the writing thereof is very easy, that is, it does not require any special hardware or write sequence.

In US4,078,259, issued to Soulsby et al., a programmable controller having a system for monitoring the logic conditions at external locations is disclosed. The same or a similar programmable controller is disclosed in US4,093,998, issued to Miller. In US4,107,785, issued to Seipp, a programmable controller using a microprocessor is disclosed. The same or a similar programmable controller is disclosed in US4,093,998, issued to Miller.

Summary of the Invention

Accordingly, it is an object of the present invention to provide a single-chip microprocessor having an on-chip PROM which can be programmed with information provided by the on-chip processor only with the permission of an external entity.

Another object of the present invention is to provide a single-chip microprocessor having a security interlock mechanism which will prevent the programming of an on-chip PROM by the on-chip processor unless an external entity provides a programming enable signal.

These and other objects are achieved in a microprocessor, on a single semiconductor chip, comprising a programmable read-only memory (PROM), a processor for processing information contained in said PROM, and a programming circuit, responsive to an input signal received from a source external to said microprocessor, for programming in said PROM information provided by said processing means.

Brief Description of the Drawings

Figure 1 illustrates in block diagram form, a single chip microprocessor having an on-chip PROM which can be programmed only in accordance with the present invention.

Figure 2 illustrates one modified form of the microprocessor shown in Figure 1.

Figure 3 illustrates one other modified form of the microprocessor shown in Figure 1.

Figure 4 illustrates another modified form of the microprocessor shown in Figure 1.

Figure 5 illustrates yet another modified form of the microprocessor shown in Figure 1.

Description of the Invention

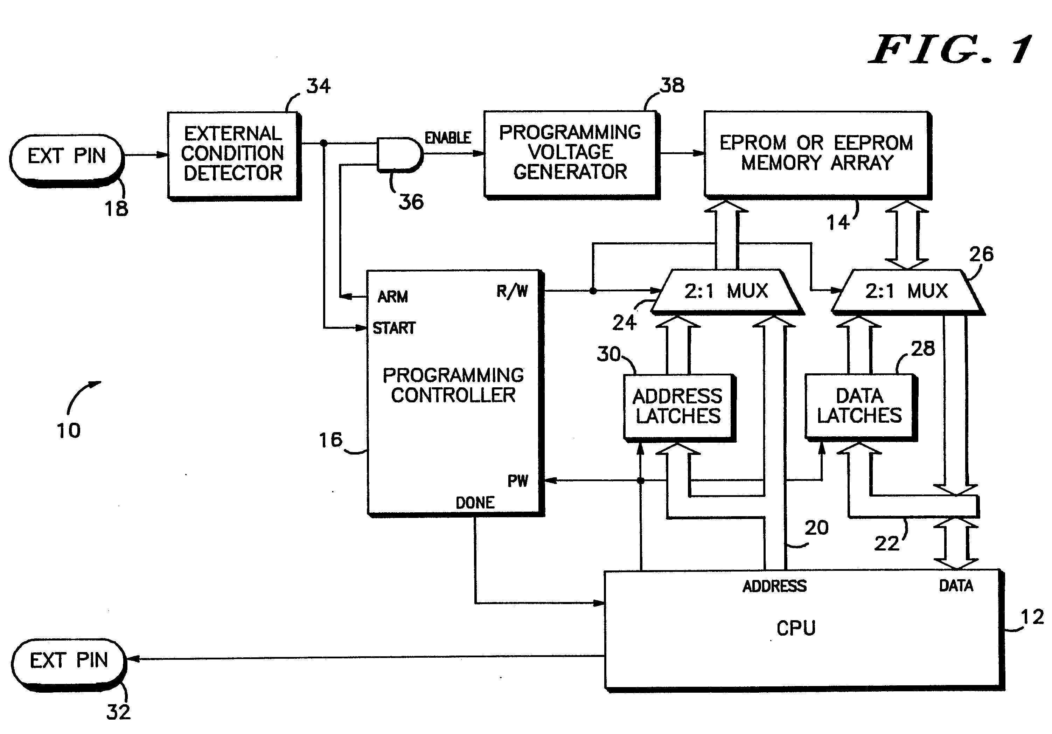

Shown in Figure 1 is a microprocessor 10 generally comprising, on a single semiconductor chip, a processor (CUP) 12, a Programmable Read-Only Memory (PROM) 14 of either the Ultra Violet (UV) Eraseable Programmable Read-Only Memory (EPROM)or Electrically Eraseable Programmable Read-only Memory (EEPROM) type, and a programming controller 16 which programs information provided by the CPU 12 into the PROM 14 only in response to receiving a START signal from an external entity (not shown), such as an external data processor, via an external interface pin 18. In normal operation, the CPU 12 processes information stored in the PROM 14, issuing addresses via an address bus 20 and receiving the data provided by the PROM 14 via a data bus 22. In response to a Read (R) signal asserted by the programming controller 16, an address multiplexor (MUX) 24 couples the address bus 20 directly to the PROM 14 while a data multiplexor (MUX) 26 couples the data bus 22 directly to the PROM 14.

In a PROM programming operation, the CPU 12 provides the data to be programmed into the PROM 14 via the data bus 22 and the address at which that data is to be programmed via the address bus 20. Simultaneously, the CPU 12 provides PROM Write (PW) signal. In response to the PW signal, a set of data latches 28 latches the data provided by the CPU 12 on the data bus 22, while a set of address latches 30 latches the address provided by the CPU 12 on the address bus 20. Upon detecting the PW signal, the programming controller 16 will negate the R signal, effectively asserting the complementary Write (W) signal. In response to the W signal, the address multiplexor (MUX) 24 couples the outputs of the address laches 30 to the PROM 14 while the data multiplexor (MUX) 26 couples the outputs of the data latches 28 to the PROM 14. Substantially simultaneously, the programming controller 16 will assert an ARM signal. At this point, the CPU 12 is free to proceed to other tasks, but the programming cycle will not have been initiated.

In the preferred embodiment shown in Figure 1, the programming cycle can be initiated only in response to the programming controller 16 receiving a START signal from a source (not shown) external to the microprocessor 10 via the external interface pin 18. Depending upon the specific application. the START signal may be continuously provided by the external source (not shown) or may be provided only in response to the CPU 12 providing special information via another external interface pin 32. In either event, the START signal may be either edge-. level- or content-sensitive, and an appropriate external condition detection circuit 34 provided to detect the START signal and assert an internal counterpart START signal.

In response to receiving both the ARM signal provided by the programming controller 16 and the internal START signal provided by the detector 34, and AND gate 36 will provide an ENABLE signal to a programming voltage generator 38, starting the programming cycle of the PROM 14. In response to detecting the internal START signal provided by the detector 34, the programming controller 16 will initiate a timing sequence selected to accomodate the programming time required by the PROM 14. At the end of the programming time period, programming controller 16 will negate the ARM signal, forcing AND gate 36 to negate the ENABLE signal and terminate the application of the programming voltage to the PROM 14 by the generator 38. Substantially simultaneously, programming controller 16 may assert a DONE signal to signal the CPU 12 that the programming of the PROM 14 has been completed.

During the programming cycle, CPU 12 may be: performing other tasks until interrupted by the DONE signal; looping awaiting the DONE signal; or "sleeping" waiting to be "awakened" by the DONE signal. In any case, in response to the DONE signal, the CPU 12 may read the information just programmed into the PROM 14 to verify its accuracy if desired, before proceeding to other tasks. If desired, CPU 12 may simply monitor the ARM signal rather than require the programming controller 16 to generate the DONE signal.

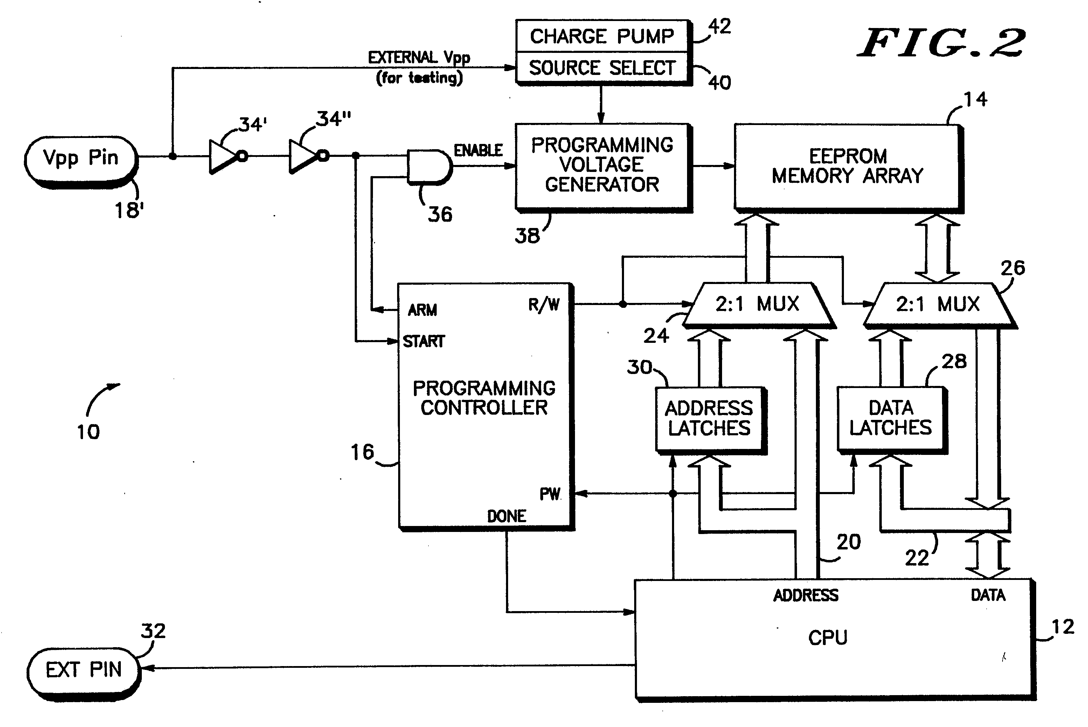

In the alternate embodiment shown in Figure 2, the external interface pin 18′ is also used to couple an external source of programming voltage (not shown) to the generator 38 via a source select switch 40. A pair of voltage-shifting buffers 34′ and 34″ detects the presence of the external programming voltage Vpp and asserts the internal START signal when Vpp is present. Buffers 34′ and 34″ may also be designed to provide the internal START signal whenever the voltage on the pin 18′ exceeds some selected voltage between ground, Vss. and normal supply, Vdd, with the switch 40 providing programming voltage from an internal charge pump 42 in the latter event.

In the embodiment shown in Figure 3. a separate Vpp pin 44 is provided. and the external interface pin 18″ is bidirectional, with the direction being determined by a conventional data direction register 46. An AND gate 48 prevents the CPU 12 from providing an output signal via the pin 18′ when the data direction register 46 is set to the input state. The AND gate 48 also prevents the CPU 12 from itself asserting the START signal via the buffers 34′ and 34″ whenever the programming controller 16 is asserting the ARM signal. In this configuration, the CPU 12 can be easily programmed to:

first, set the data direction register 46 to the output state, and output a signal to the external source (not shown) indicating that programming may be initiated, if desired, on the next clock cycle;

second, latch the appropriate address and data information in the latches 30 and 28, respectively, using the PW signal;

third. set the data direction 46 to the input state so that the external source (not shown) can assert the START signal; and

finally, wait until the programming cycle has been completed.

Since the START signal is now visible to the CPU 12 via the port read data path, the CPU 12 may easily be programmed to loop until either the START signal is received or a reasonable amount of time has elapsed since the external source (not shown) was signaled, and, in the latter event, to assume that programming was not approved and simply proceed to either an appropriate exception routine or to other meaningful tasks, as appropriate. If desired, such an arrangement may also be provided in the embodiments shown in Figures 1 and 2.

In the embodiment shown in Figure 4, the external interface pin 18‴ may be used by the CPU 12 as a normal bidirectional port, such as in Figure 3, or by a conventional serial communication interface (SCI) 50 as a half-duplex serial communication port. In response to the CPU 12 loading a transmit operand via the address and data buses 20 and 22, respectively, into a Transmit Data Register 52, the SCI 50 will assert a Transmit (XMIT) ON signal to enable a multiplexor 54 to couple the bit-serial Transmit Data (TxD) signal to the pin 18‴ via the AND gate 48 (which is enabled via an OR gate 56). In this form, the SCI 50 may be used by the CPU 12 to transmit the appropriate signal to the external programming controller (not shown) that the PROM 14 has been prepared for programming. In response to receiving the reply of the external controller (not shown) via buffers 34′ and 34″ as a bit-serial Receive Data (RxD) signal, SCI 50 will load the receive operand into a Receive Data Register 58. Either in response to receiving an Interupt (INT) signal from the SCI 50 indicating that the Receive Data Register 58 is full or prior thereto, CPU 12 will load a special value into a Key Register 60. In response to detecting that the operand in the Receive Data Register 58 is identical to the special value in the Key Register 60, a Comparator 62 will assert the START signal and initiate the programming cycle. If desired, additional logic may be added so that the external controller (not shown) must provide a sequence of operands that conform to a corresponding sequence of special values provided by the CPU 12. Similarly, the Key Register 60 and Comparator 62 may be eliminated, if desired, and very simple logic substituted to assert the START signal if a selected bit of the operand in the Receive Data Register 58 is "set", for example. Since the CPU 12 will always be interrupted by the INT signal when the reply is received from the external controller (not shown) and can readily read the operand in the Receive Data Register 58 via the address and data buses 20 and 22, respectively, the CPU 12 will be able to detect the decision of the external controller (not shown).

In the simplified form shown in Figure 5, a simple flip-flop 64 controls the generator 38 to effect programming of the PROM 14. After latching the address and data into the address and data latches 30 and 28, resepectively, via the PW signal, CPU 12 will provide an appropriate signal to the external controller (not shown) via the pin 18. Either immediately thereafter or after some selected delay interval, CPU 12 will activate a single-pole, double-throw (SPDT) switch 66 to couple the pin 18 directly to the Set (S) input of the flip-flop 64. The next input pulse from the external controller (not shown) will then set flip-flop 64 and start the programming cycle. In response to detecting the setting of the flip-flop 64, CPU 12 can deactivate the switch 66 and decouple the flip-flop 64 from the pin 18. In this form, the CPU 12 cannot configure the switch 66 so as to gain access to the S input of the flip-flop 64. Termination of the programming cycle may be accomplished in any of number of alternate ways. For example, an appropriate time period after detecting the setting of the flip-flop 64, CPU 12 can assert a clear signal to the Clear (C) input of the flip-flop 64. If a suitable, autonomous timer 68 is available, CPU 12 can "set-up" and start the timer 68 when the flip-flop 64 is set, and let the time-out event clear the flip-flop 64. The time-out event could also be used to interrupt or "wake-up" the CPU 12 so it could clear the flip-flop 64. Of course, the generator 38 could be constructed to be "self-timing", if desired, so as to automatically clear the flip-flop 64 when the programming of the PROM is complete.

Although the invention has been described in the context of a preferred embodiment and several modifications thereof, other changes and modifications may be made in all such embodiments without departing from the spirit and scope of the present invention. In general, various other techniques may be used to verify that the START signal received from the external controller (not shown) is correct. For example, the external interface pin 18 may be coupled, either directly or via switch 66, to an edge-sensitive counter (not shown), so that the START signal will be asserted only if the external controller (not shown) provides a predetermined number of signal "edges". In all such forms, however, the START signal will comply with the edge-, level- or content- sensitive criteria appropriate for the given application and desired level of security. In some applications requiring minimal security, the system designer may elect to provide a signal path, either direct or indirect, from a normal output or input/output pin of the CPU 12, such as pin 32 of Figure 1, to the external interface pin 18 so that the CPU 12 may, in fact, be able to initiate the START signal itself. Similarly, the CPU 12 may be configured so as to directly provide the ARM signal to the AND gate 36 rather than the programming controller 16. In the latter form, the CPU 12 preferably will also assume all timing responsibilities.

## Claims

1. A microprocessor (10), on a single semiconductor chip, comprising:
a programmable read-only memory (PROM) (14);
processing means (12) for processing information contained in said PROM; and
programming means (16), responsive to an input signal received from a source external to said microprooessor, for programming in said PROM information provided by said processing means.

2. The microprocessor of claim 1 wherein the programming means includes level-sensitive detector means (34) for detecting said input signal.

3. The microprocessor of claim 1 wherein the programming means includes edge-sensitive detector means for detecting said input signal.

4. The microprocessor of claim 1 wherein the programming means (62) includes content-sensitive detector means for detecting said input signal.

5. The microprocessor of claim 1 wherein the programming means includes:
data latch means (28), responsive to said processing means, for latching data to be programmed in said PROM; and
address latch means (24), responsive to said processing means, for latching an address in said PROM at which said data operand is to be programmed.

6. The microprocessor of claim 5 wherein the programming means further include:

first logic means (ARM) for asserting a first control signal in response to said data and address latches latching said data and address, respectively;

second logic means (36), responsive to said input signal and said first control signal, for asserting a program enable signal; and

means (38), responsive to said program enable signal, for programming into said PROM the data in said data latches at the address in said address latches.

7. The microprocessor of claim 6 wherein the second logic means negates said program enable signal after a predetermined time period.

8. The microprocessor of claim 7 wherein the programming means futher includes:

third logic means (64) for asserting a second control signal to said processing means in response to said second logic means negating said program enable signal.

9. The microprocessor of claim 1 wherein the processing means provides an output signal to said external source to indicate that said information to be programmed in said PROM has been provided.

10. The microprocessor of claim 1 wherein the processing means asserts a first control signal after said data and address latches have latched said data and address, respectively, and wherein the programming means include;

first logic means (36), responsive to said input signal and said first control signal, for asserting a program enable signal; and

means (38), responsive to said program enable signal, for programming into said PROM the data in said data latches at the address in said address latches.

**FIG. 1**

EXT PIN 18 → EXTERNAL CONDITION DETECTOR 34 → 36 → ENABLE → PROGRAMMING VOLTAGE GENERATOR 38 → EPROM OR EEPROM MEMORY ARRAY 14

PROGRAMMING CONTROLLER 16

ARM, START, R/W, PW, DONE

2:1 MUX 24, 2:1 MUX 26

ADDRESS LATCHES 30, DATA LATCHES 28

CPU 12

ADDRESS 20, DATA 22

EXT PIN 32

10

EP 0 316 549 A2

FIG.2

CHARGE PUMP ~42

EXTERNAL Vpp (for testing)

SOURCE SELECT ~40

Vpp Pin

18'

34'  34"

36

ENABLE

PROGRAMMING VOLTAGE GENERATOR

38

EEPROM MEMORY ARRAY

14

PROGRAMMING CONTROLLER

ARM

START

R/W

16

PW.

DONE

2:1 MUX

24

2:1 MUX

26

ADDRESS LATCHES

30

DATA LATCHES

28

20  22

CPU

ADDRESS  DATA

12

10

32

EXT PIN

EP 0 316 549 A2

FIG.3

EP 0 316 549 A2

FIG.4

# FIG.5

EP 0 316 549 A2